# EUROPEAN PATENT APPLICATION

(11) **EP 4 362 372 A1**
(43) Date of publication of application: **01.05.2024**
(21) Application number: 22841469.4
(22) Date of filing: 14.07.2022
(51) Int. Cl.: H04L 5/00, H04W 76/15

(54) **ELEMENT INHERITANCE METHOD AND APPARATUS**

(30) Priority: 15.07.2021 CN 202110802036
(71) Applicant: Huawei Technologies Co., Ltd., Shenzhen, Guangdong 518129 (CN)
(72) Inventor: LI, Yiqing, Shenzhen, Guangdong 518129 (CN); GAN, Ming, Shenzhen, Guangdong 518129 (CN); LI, Yunbo, Shenzhen, Guangdong 518129 (CN); GUO, Yuchen, Shenzhen, Guangdong 518129 (CN); HUANG, Guogang, Shenzhen, Guangdong 518129 (CN)
(74) Representative: Huawei European IPR
(86) International application number: PCT/CN2022/105783
(87) International publication number: WO 2023/284836

(57) **Abstract**

This application provides an element inheritance method and an apparatus, to resolve a problem of setting, in a per-station profile subelement, an element that is not inherited from a transmitted BSSID by a nontransmitted BSSID. The method includes: A first access point generates and sends a management frame, and a station receives and parses the management frame. The management frame includes a multiple BSSID element and an element corresponding to the transmitted BSSID, a nontransmitted BSSID profile subelement in the multiple BSSID element includes a basic variant multi-link element, and a per-station profile subelement included in the basic variant multi-link element corresponds to a second access point. In a case in which the element corresponding to the transmitted BSSID includes a first element, and an identifier of the first element is listed in a non-inheritance element of the nontransmitted BSSID profile subelement, when the second access point does not inherit the first element, the identifier of the first element is listed in a non-inheritance element of the per-station profile subelement, or when the second access point inherits the first element from the element corresponding to the transmitted BSSID, the first element is not present in the per-station profile subelement, and the identifier of the first element is not listed in a non-inheritance element of the per-station profile subelement.

## Description

This application claims priority to Chinese Patent Application No. 202110802036.1, filed with the China National Intellectual Property Administration on July 15, 2021 and entitled "ELEMENT INHERITANCE METHOD AND APPARATUS", which is incorporated herein by reference in its entirety.

### TECHNICAL FIELD

This application relates to the field of communication technologies, and in particular, to an element inheritance method and an apparatus.

### BACKGROUND

In a wireless local area network (wireless local area network, WLAN), a same multiple basic service set identifier (basic service set identifier, BSSID) set includes a transmitted BSSID and a nontransmitted BSSID. Usually, a reporting (reporting) access point (access point, AP) corresponding to the transmitted BSSID may send, by using a management frame, an element (element) corresponding to the transmitted BSSID. In addition, the management frame may further carry an element of a reported (reported) AP. The reported AP may include an AP corresponding to the nontransmitted BSSID, and may further include another AP that belongs to a same AP multi-link device (multi-link device, MLD) with the AP corresponding to the nontransmitted BSSID.

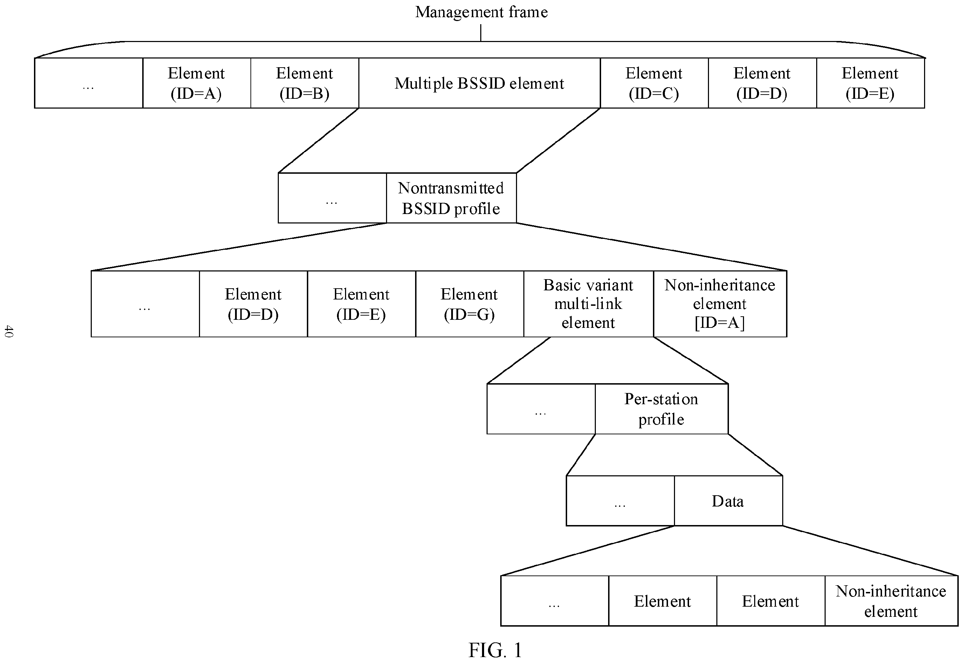

For example, as shown in FIG. 1, elements with identifiers (identifiers, IDs) A, B, C, D, and E carried in the management frame are elements corresponding to the transmitted BSSID. A multiple BSSID element (Multiple BSSID element) of the management frame may include a nontransmitted BSSID profile (Nontransmitted BSSID Profile) subelement corresponding to the AP corresponding to the nontransmitted BSSID. A basic variant multi-link element (Basic variant Multi-Link element) of the nontransmitted BSSID profile subelement may include a per-station profile (Per-STA Profile) subelement corresponding to the another AP that belongs to the same AP MLD with the AP corresponding to the nontransmitted BSSID.

In an existing element inheritance rule, the nontransmitted BSSID may inherit an element from the transmitted BSSID, and the AP corresponding to the per-station profile subelement may inherit an element from the nontransmitted BSSID. When the nontransmitted BSSID inherits an element from the transmitted BSSID, the element may not be present in the nontransmitted BSSID profile subelement, and an identifier of the element is not listed in a non-inheritance (Non-Inheritance) element of the nontransmitted BSSID profile subelement; or when the nontransmitted BSSID does not inherit an element from the transmitted BSSID, an identifier of the element is listed in a non-inheritance (Non-Inheritance) element of the nontransmitted BSSID profile subelement, for example, when the nontransmitted BSSID does not inherit an element A, an identifier of the element A is listed in the non-inheritance element of the nontransmitted BSSID profile subelement. There is similar inheritance between the nontransmitted BSSID and the AP corresponding to the per-station profile subelement.

In the foregoing element inheritance discussion, a form of setting, in a per-station profile subelement, an element (for example, the element A) that is not inherited from the transmitted BSSID by the nontransmitted BSSID is an urgent problem to be resolved currently.

### SUMMARY

Embodiments of this application provide an element inheritance method and an apparatus, to resolve a problem of setting, in a per-station profile subelement, an element that is not inherited from a transmitted BSSID by a nontransmitted BSSID, and reduce signaling overheads or explicitly indicate that an AP corresponding to the per-station profile subelement does not inherit the element.

According to a first aspect, an element inheritance method is provided. The method includes: A first access point generates and sends a management frame. The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement, when the second access point does not inherit the first element, the identifier of the first element is listed in a non-inheritance element of the per-station profile subelement, or when the second access point inherits the first element from the element corresponding to the transmitted BSSID, the first element is not present in the per-station profile subelement, and the identifier of the first element is not listed in a non-inheritance element of the per-station profile subelement.

Based on this solution, for the first element that is not inherited from the transmitted BSSID by a nontransmitted BSSID, the identifier of the first element is listed in the non-inheritance element of the per-station profile subelement. This can directly and explicitly indicate that an access point corresponding to the per-station profile subelement does not inherit the first element, so that a station can quickly learn that the second access point does not provide the first element, thereby reducing a parsing delay of the management frame. Alternatively, when the second access point provides the first element, and a value of the first element is the same as a value of the first element corresponding to the transmitted BSSID, the first element may not be present in the per-station profile subelement, and the identifier of the first element is not listed in the non-inheritance element of the per-station profile subelement, to indicate that the second access point inherits the first element from the element corresponding to the transmitted BSSID. Compared with a solution in which the second access point can inherit an element from only the nontransmitted BSSID, in this solution, the first element may not be present in the per-station profile subelement. This can reduce signaling overheads occupied by the first element.

In some possible designs, in a case in which the element corresponding to the transmitted BSSID includes a second element, a second element is present in the nontransmitted BSSID profile subelement, and a value of the second element corresponding to the transmitted BSSID is different from a value of the second element present in the nontransmitted BSSID profile subelement, when the second access point inherits the second element from the nontransmitted BSSID, the second element is not present in the per-station profile subelement, and an identifier of the second element is not listed in the non-inheritance element of the per-station profile subelement. The nontransmitted BSSID is a BSSID corresponding to the nontransmitted BSSID profile subelement.

Based on this possible design, for the second element present in both the management frame and the nontransmitted BSSID profile subelement, the second access point can inherit the second element from the nontransmitted BSSID. This reduces signaling overheads occupied by the second element.

In some possible designs, in a case in which a third element is present in the nontransmitted BSSID profile subelement, when the second access point does not inherit the third element, an identifier of the third element is listed in the non-inheritance element of the per-station profile subelement, or when the second access point inherits the third element from the nontransmitted BSSID, the third element is not present in the per-station profile subelement, and an identifier of the third element is not listed in the non-inheritance element of the per-station profile subelement. The nontransmitted BSSID is the BSSID corresponding to the nontransmitted BSSID profile subelement.

Based on this possible design, for the third element present in the nontransmitted BSSID profile subelement, the identifier of the third element is listed in the non-inheritance element of the per-station profile subelement. This can directly and explicitly indicate that the second access point does not inherit the third element, so that the station can quickly learn that the second access point does not provide the third element, thereby reducing a parsing delay of the management frame. Alternatively, when the second access point provides the third element, and the value of the third element is the same as a value of a third element corresponding to the transmitted BSSID, the third element may not be present in the per-station profile subelement, and an identifier of the third element is not listed in the non-inheritance element of the per-station profile subelement, to indicate that the second access point inherits the third element from the nontransmitted BSSID. This reduces signaling overheads occupied by the third element.

According to a second aspect, an element inheritance method is provided. The method includes: A station receives a management frame from a first access point. The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement, when the identifier of the first element is listed in a non-inheritance element of the per-station profile subelement, the station determines that the second access point does not inherit the first element, or when the first element is not present in the per-station profile subelement, and the identifier of the first element is not listed in a non-inheritance element of the per-station profile subelement, the station determines that the second access point inherits the first element from the element corresponding to the transmitted BSSID.

Based on this solution, for the first element that is not inherited from the transmitted BSSID by a nontransmitted BSSID, when the identifier of the first element is listed in the non-inheritance element of the per-station profile subelement, the station can quickly determine that the second access point does not provide the first element, thereby reducing a parsing delay of the management frame. Alternatively, when the first element may not be present in the per-station profile subelement, and the identifier of the first element is not listed in the non-inheritance element of the per-station profile subelement, the station can determine that the second access point inherits the first element from the element corresponding to the transmitted BSSID. Compared with a solution in which the second access point can inherit an element from only the nontransmitted BSSID, in this solution, the first element may not be present in the per-station profile subelement. This can reduce signaling overheads occupied by the first element.

In some possible designs, the method further includes: in a case in which the element corresponding to the transmitted BSSID includes a second element, a second element is present in the nontransmitted BSSID profile subelement, and a value of the second element corresponding to the transmitted BSSID is different from a value of the second element present in the nontransmitted BSSID profile subelement, when the second element is not present in the per-station profile subelement, and an identifier of the second element is not listed in the non-inheritance element of the per-station profile subelement, the station determines that the second access point inherits the second element from the nontransmitted BSSID. The nontransmitted BSSID is a BSSID corresponding to the nontransmitted BSSID profile subelement.

In some possible designs, the method further includes: In a case in which a third element is present in the nontransmitted BSSID profile subelement, when an identifier of the third element is listed in the non-inheritance element of the per-station profile subelement, the station determines that the second access point does not inherit the third element, or when the third element is not present in the per-station profile subelement, and an identifier of the third element is not listed in the non-inheritance element of the per-station profile subelement, the station determines that the second access point inherits the third element from the nontransmitted BSSID. The nontransmitted BSSID is the BSSID corresponding to the nontransmitted BSSID profile subelement.

For technical effect brought by any possible design of the second aspect, refer to technical effect brought by corresponding designs of the first aspect. Details are not described herein again.

According to a third aspect, a first access point is provided. The first access point includes a processing module and a transceiver module. The processing module is configured to generate a management frame. The transceiver module is configured to send the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement,
when the second access point does not inherit the first element, the identifier of the first element is listed in a non-inheritance element of the per-station profile subelement, or
when the second access point inherits the first element from the element corresponding to the transmitted BSSID, the first element is not present in the per-station profile subelement, and the identifier of the first element is not listed in a non-inheritance element of the per-station profile subelement.

The first access point provided in the third aspect is configured to implement behavior functions of the first access point in any one of the first aspect or the possible designs of the first aspect. For specific details, refer to the descriptions in any one of the first aspect or the possible designs of the first aspect. Details are not described herein again.

According to a fourth aspect, a station is provided. The station includes a processing module and a transceiver module. The transceiver module is configured to receive a management frame from a first access point, the management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point.

The processing module is configured to: in a case in which the element corresponding to the transmitted BSSID includes a first element, and an identifier of the first element is listed in a non-inheritance element of the nontransmitted BSSID profile subelement,
when the identifier of the first element is listed in a non-inheritance element of the per-station profile subelement, determine that the second access point does not inherit the first element, or
when the first element is not present in the per-station profile subelement, and the identifier of the first element is not listed in a non-inheritance element of the per-station profile subelement, determine that the second access point inherits the first element from the element corresponding to the transmitted BSSID.

The station provided in the fourth aspect is configured to implement behavior functions of the station in any one of the second aspect or the possible designs of the second aspect. For details, refer to descriptions in any one of the second aspect or the possible designs of the second aspect. Details are not described herein again.

According to a fifth aspect, a first access point is provided. The first access point includes a processing circuit and an output interface that is internally connected to and communicates with the processing circuit. The processing circuit is configured to generate a management frame. The output interface is configured to send the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement,
when the second access point does not inherit the first element, the identifier of the first element is listed in a non-inheritance element of the per-station profile subelement, or
when the second access point inherits the first element from the element corresponding to the transmitted BSSID, the first element is not present in the per-station profile subelement, and the identifier of the first element is not listed in a non-inheritance element of the per-station profile subelement.

The first access point provided in the fifth aspect is configured to implement behavior functions of the first access point in any one of the first aspect or the possible designs of the first aspect. For specific details, refer to the descriptions in any one of the first aspect or the possible designs of the first aspect. Details are not described herein again.

According to a sixth aspect, a station is provided. The station includes a processing circuit and an input interface that is internally connected to and communicates with the processing circuit. The input interface is configured to receive a management frame from a first access point, the management frame includes a multiple basic service set identifier BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point.

The processing circuit is configured to: in a case in which the element corresponding to the transmitted BSSID includes a first element, and an identifier of the first element is listed in a non-inheritance element of the nontransmitted BSSID profile subelement,
when the identifier of the first element is listed in a non-inheritance element of the per-station profile subelement, determine that the second access point does not inherit the first element, or
when the first element is not present in the per-station profile subelement, and the identifier of the first element is not listed in a non-inheritance element of the per-station profile subelement, determine that the second access point inherits the first element from the element corresponding to the transmitted BSSID.

The station provided in the sixth aspect is configured to implement behavior functions of the station in any one of the second aspect or the possible designs of the second aspect. For details, refer to descriptions in any one of the second aspect or the possible designs of the second aspect. Details are not described herein again.

According to a seventh aspect, a first access point is provided. The first access point includes a processor and a transceiver that is internally connected to and communicates with the processor. The processor is configured to generate a management frame. The transceiver is configured to send the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement,
when the second access point does not inherit the first element, the identifier of the first element is listed in a non-inheritance element of the per-station profile subelement, or
when the second access point inherits the first element from element corresponding to the transmitted BSSID, the first element is not present in the per-station profile subelement, and the identifier of the first element is not listed in a non-inheritance element of the per-station profile subelement.

The first access point provided in the seventh aspect is configured to implement behavior functions of the first access point in any one of the first aspect or the possible designs of the first aspect. For specific details, refer to the descriptions in any one of the first aspect or the possible designs of the first aspect. Details are not described herein again.

According to an eighth aspect, a station is provided. The station includes a processor and a transceiver that is internally connected to and communicates with the processor. The transceiver is configured to receive a management frame from a first access point, the management frame includes a multiple basic service set identifier BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point.

The processor is configured to: in a case in which the element corresponding to the transmitted BSSID includes a first element, and an identifier of the first element is listed in a non-inheritance element of the nontransmitted BSSID profile subelement,
when the identifier of the first element is listed in a non-inheritance element of the per-station profile subelement, determine that the second access point does not inherit the first element, or
when the first element is not present in the per-station profile subelement, and the identifier of the first element is not listed in a non-inheritance element of the per-station profile subelement, determine that the second access point inherits the first element from the element corresponding to the transmitted BSSID.

The station provided in the eighth aspect is configured to implement behavior functions of the station in any one of the second aspect or the possible designs of the second aspect. For details, refer to descriptions in any one of the second aspect or the possible designs of the second aspect. Details are not described herein again.

According to a ninth aspect, an embodiment of this application provides a computer-readable storage medium, configured to store a computer program. The computer program includes instructions used to perform the method in any one of the first aspect or the possible implementations of the first aspect.

According to a tenth aspect, an embodiment of this application provides a computer-readable storage medium, configured to store a computer program. The computer program includes instructions used to perform the method in any one of the second aspect or the possible implementations of the second aspect.

According to an eleventh aspect, an embodiment of this application provides a computer program product. The computer program product includes instructions used to perform the method in any one of the first aspect or the possible implementations of the first aspect.

According to a twelfth aspect, an embodiment of this application provides a computer program product. The computer program product includes instructions used to perform the method in any one of the second aspect or the possible implementations of the second aspect.

According to a thirteenth aspect, an embodiment of this application provides a communication system. The communication system includes the first access point and the station provided in the third aspect, the fifth aspect, or the seventh aspect.

According to a fourteenth aspect, an embodiment of this application provides a communication system. The communication system includes the station and the first access point provided in the fourth aspect, the sixth aspect, or the eighth aspect.

### BRIEF DESCRIPTION OF DRAWINGS

FIG. 1 is a schematic diagram 1 of a frame structure according to an embodiment of this application;
FIG. 2 is a schematic diagram of a structure of a multi-link device according to an embodiment of this application;
FIG. 3 is a schematic diagram 2 of a frame structure according to an embodiment of this application;
FIG. 4 is a schematic diagram of a structure of a communication system according to an embodiment of this application;
FIG. 5 is a schematic flowchart of an element inheritance method according to an embodiment of this application;
FIG. 6 is a schematic diagram 3 of a frame structure according to an embodiment of this application;
FIG. 7a is a schematic diagram 4 of a frame structure according to an embodiment of this application;
FIG. 7b is a schematic diagram 5 of a frame structure according to an embodiment of this application;
FIG. 8 is a schematic diagram 6 of a frame structure according to an embodiment of this application;
FIG. 9 is a schematic diagram 7 of a frame structure according to an embodiment of this application;
FIG. 10 is a schematic diagram 8 of a frame structure according to an embodiment of this application;
FIG. 11 is a schematic diagram 9 of a frame structure according to an embodiment of this application;
FIG. 12 is a schematic diagram of a structure of a communication apparatus according to an embodiment of this application; and
FIG. 13 is a schematic diagram of a structure of another communication apparatus according to an embodiment of this application.

### DESCRIPTION OF EMBODIMENTS

Unless otherwise specified, "/" in the descriptions of embodiments of this application represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists. A and B may be singular or plural.

In descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

It may be understood that "an embodiment" mentioned in the entire specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, in this application, "when" and "if" mean that corresponding processing is performed in an objective situation, are not intended to limit a time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the apparatus provided in embodiments of this application may also correspondingly implement these features or functions. Details are not described herein.

In this application, unless otherwise specified, for same or similar parts of embodiments, refer to each other. In embodiments of this application and the implementations/implementation methods/implementation methods in embodiments, unless otherwise specified or a logical conflict occurs, terms and/or descriptions are consistent and may be mutually referenced between different embodiments and between the implementations/implementation methods/implementation methods in embodiments. Technical features in the different embodiments and the implementations/implementation methods/implementation methods in embodiments may be combined to form a new embodiment, implementation, implementation method, or implementation method based on an internal logical relationship thereof. The following implementations of this application are not intended to limit the protection scope of this application.

For ease of understanding of the technical solutions in embodiments of this application, the technologies related to this application are first briefly described as follows.

### 1. Multi-link device (multi-link device, MLD)

To achieve a technical objective of extremely high throughput, a next-generation WLAN standard (802.11be) of the Institute of Electrical and Electronics Engineers (institute of electrical and electronics engineers, IEEE) uses the extremely high throughput (extremely high throughput, EHT) as a technical objective, and an existing key technology is multi-link (multi-link, ML) communication.

A core idea of multi-link communication is that a WLAN device that supports the next-generation IEEE 802.11 standard has a capability of sending and receiving on a plurality of frequency bands, so that a larger bandwidth can be used for transmission. This can further improve the throughput. The WLAN device that has the capability of sending and receiving on the plurality of frequency bands may be referred as the MLD. For example, the plurality of frequency bands include but are not limited to a 2.4 GHz frequency band, a 5 GHz frequency band, and a 6 GHz frequency band.

In this application, the MLD includes at least two affiliated (affiliated) stations (stations, STAs), namely, affiliated STAs. The affiliated station may be an access point station (access point station, AP STA) or a non-access point station (non-access point station, non-AP STA).

For ease of description, the AP STA is briefly referred to as an AP, and the non-AP STA is briefly referred to as a STAin the following embodiments of this application. Amulti-link device whose affiliated station is an AP may be referred to as an AP multi-link device (AP multi-link device, AP MLD), and a multi-link device whose affiliated station is a STA may be referred to as a STA multi-link device (STA multi-link device, STA MLD).

In this application, each affiliated station of the MLD may set up a link for communication, so that links set up by a plurality of affiliated stations are referred to as a multi-link.

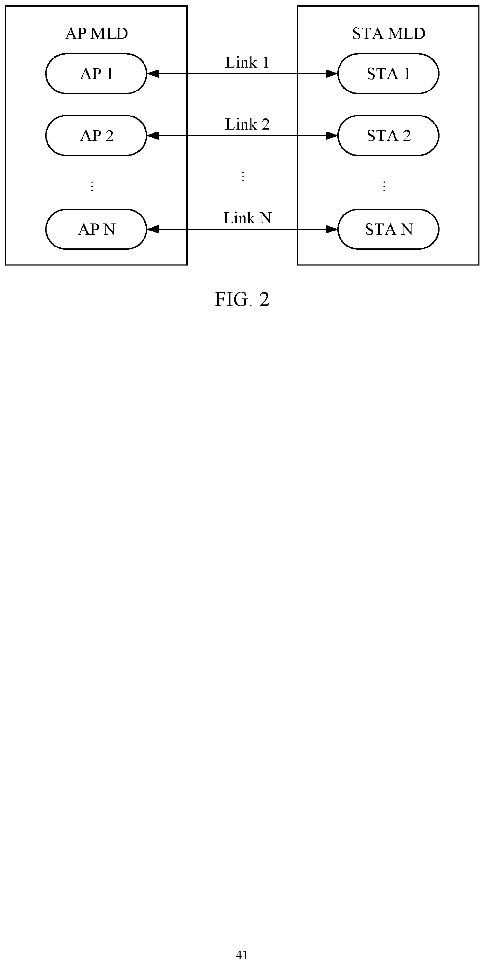

For example, as shown in FIG. 2, an AP MLD and a STAMLD communicate with each other, the AP MLD includes an AP 1 to an AP N, and the STAMLD includes a STA 1 to a STAN. The AP 1 communicates with the STA 1 over a link 1, an AP 2 communicates with a STA 2 over a link 2, and so on. The station AP N communicates with the STA N over a link N.

### 2. Inheritance and non-inheritance

When a nontransmitted BSSID inherits an element from a transmitted BSSID, it indicates that an AP (or a BSS) corresponding to the nontransmitted BSSID provides the element, and a value of the element is the same as a value of the element corresponding to the transmitted BSSID. When a nontransmitted BSSID does not inherit an element corresponding to a transmitted BSSID, it indicates that an AP (or a BSS) corresponding to the nontransmitted BSSID does not need to provide or cannot provide the element or information about the element.

Similarly, when an AP corresponding to a per-station profile subelement inherits an element from the nontransmitted BSSID, it indicates that the AP corresponding to the per-station profile subelement provides the element, and a value of the element is the same as a value of the element provided by the AP corresponding to the nontransmitted BSSID. When an AP corresponding to a per-station profile subelement does not inherit an element corresponding to the nontransmitted BSSID, it indicates that the AP corresponding to the per-station profile subelement does not need to provide or cannot provide information about the element.

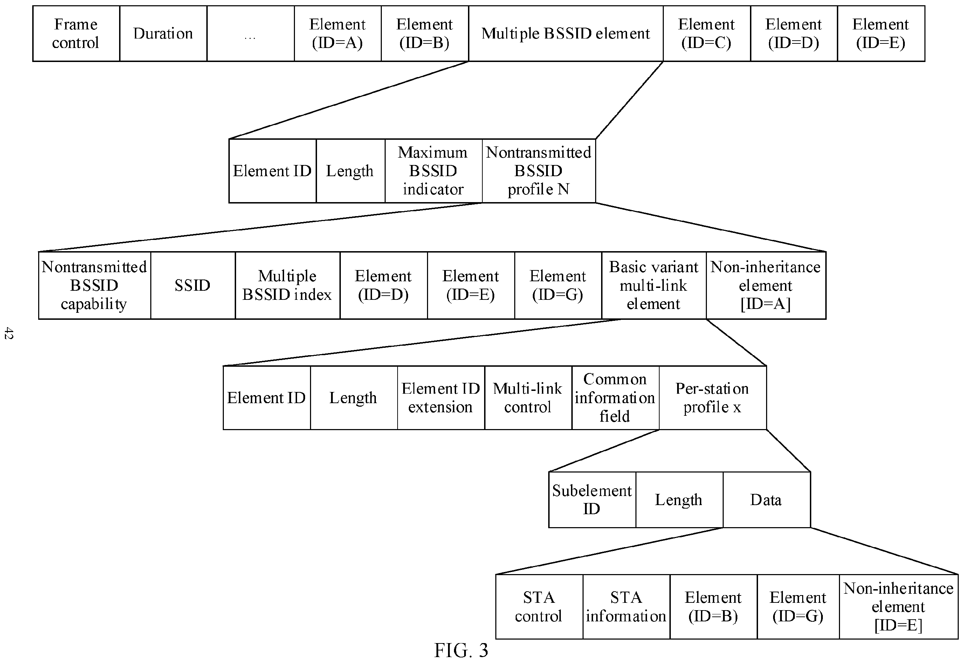

For example, as shown in FIG. 3, a reporting AP that generates and sends a management frame is an AP 1. The management frame includes a frame control (frame control) field, a duration (duration) field, an element A, an element B, a multiple BSSID element (Multiple BSSID element), an element C, an element D, an element E, and the like. The elements A, B, C, D, and E are elements corresponding to a transmitted BSSID. The transmitted BSSID is used to identify a BSS to which the AP 1 belongs. The element corresponding to the transmitted BSSID may be understood as an element provided by the AP 1.

The multiple BSSID element includes an element identifier (element ID) field, a length (length) field, a maximum BSSID indicator (MaxBSSID Indicator) field, and a nontransmitted BSSID profile N (Nontransmitted BSSID profile N) subelement. The nontransmitted BSSID profile N subelement corresponds to an AP N. The AP N and the AP 1 belong to a same multiple BSSID set, and the AP N is an AP belonging to an AP MLD A. It may be understood that the AP N is an AP corresponding to the nontransmitted BSSID.

The nontransmitted BSSID profile N subelement includes a nontransmitted BSSID capability (Nontransmitted BSSID capability) field, a service set identifier (service set identifier, SSID) field, a multiple BSSID index (Multiple BSSID Index) field, an element D, an element E, an element G, a basic variant multi-link element (Basic variant Multi-Link element), and a non-inheritance (Non-Inheritance) element.

Compared with those in a frame body of the management frame, none of elements A, B, and C is present in the nontransmitted BSSID profile N subelement, and an identifier of the element Ais listed in a non-inheritance element of the nontransmitted BSSID profile N subelement, which indicates that the nontransmitted BSSID does not inherit the element A, that is, the AP N does not need to provide or cannot provide the element A. Identifiers of the element B and the element C are not listed in the non-inheritance element of the nontransmitted BSSID profile N subelement, which indicates that the AP N provides the element B and the element C, and values of the element B and the element C are respectively the same as values of the element B and the element C in the frame body of the management frame.

In addition, the element D and the element E present in the frame body of the management frame are also present in the nontransmitted BSSID profile N subelement, which indicates that values of the element D and the element E that are provided by the AP N are respectively different from values of the element D and the element E in the frame body of the management frame. An element G that is not present in the frame body of the management frame is present in the nontransmitted BSSID profile N subelement, which indicates that the AP N can provide the element G that is not present in the frame body of the management frame.

The basic variant multi-link element includes an element ID (Element ID) field, a length (length) field, an element ID extension (Element ID Extension), a multi-link control (Multi-Link Control) field, a common information field (Common Info field), and a per-station profile x (Pre-STA Profile x) subelement. The per-station profile x subelement corresponds to an AP x, and the AP x and the AP N belong to a same AP MLD, for example, the foregoing AP MLD A. That is, the AP x is an AP that belongs to the same AP MLD with an AP (AP N) corresponding to the nontransmitted BSSID.

The per-station profile x subelement includes a subelement ID (Subelement ID) field, a length (length) field, and a data (data) field. The data field includes a STA control (STA Control) field, a STA information (STA Info) field, an element B, an element G, and a non-inheritance element.

Compared with those in the nontransmitted BSSID profile N subelement, none of an element C, an element D, and an element E is present in the per-station profile x subelement, and identifiers of the element C and the element D are not listed in the non-inheritance element of the per-station profile x subelement, which indicates that the AP x inherits the element C and the element D from the nontransmitted BSSID, that is, the AP x provides information about the element C and the element D, and values of the element C and the element D that are provided by the AP x are respectively the same as values of the element C and the element D that are provided by the AP N. An identifier of the element E is listed in the non-inheritance element of the nontransmitted BSSID profile N subelement, which indicates that the AP x does not need to provide or cannot provide information about the element E.

In addition, the element G present in the nontransmitted BSSID profile N subelement is also present in the per-station profile x subelement, which indicates that a value of the element G provided by the AP x is different from a value of the element G provided by the AP N. The element B is present in the per-station profile x subelement, which indicates that a value of the element B provided by the AP x is different from the value of the element B provided by the AP N.

For meanings of related fields shown in FIG. 3, refer to related descriptions in the 802. 1The standard. Details are not described herein again.

As described in the background, in the foregoing inheritance rule, a form of setting, in a per-station profile subelement, an element that is not inherited from a transmitted BSSID by a nontransmitted BSSID, for example, the element A shown in FIG. 3, is an urgent problem to be resolved currently. In view of this, this application provides an element inheritance method. The method is used to resolve a problem of setting, in the per-station profile subelement, the element that is not inherited from the transmitted BSSID by the nontransmitted BSSID, and can reduce signaling overheads or explicitly indicate that an AP corresponding to the per-station profile subelement does not inherit the element.

The method provided in this application is applicable to a wireless fidelity (wireless fidelity, Wi-Fi) scenario or a WLAN scenario, for example, applicable to an IEEE 802.11 system standard, for example, the 802. 11a/b/g standard, the 802.11n standard, the 802.11ac standard, the 802.11ax standard, a next-generation standard (for example, the 802.11be standard), or a further next-generation standard. Alternatively, embodiments of this application are applicable to a wireless local area network system, for example, an internet of things (internet of things, IoT) system or a vehicle-to-X (vehicle-to-X, V2X) system. It is clear that embodiments of this application are also applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a 5th generation (5th generation, 5G) communication system.

The communication system applicable to this application is merely an example for description, and the communication system applicable to this application is not limited thereto. This is uniformly described herein, and details are not described below again.

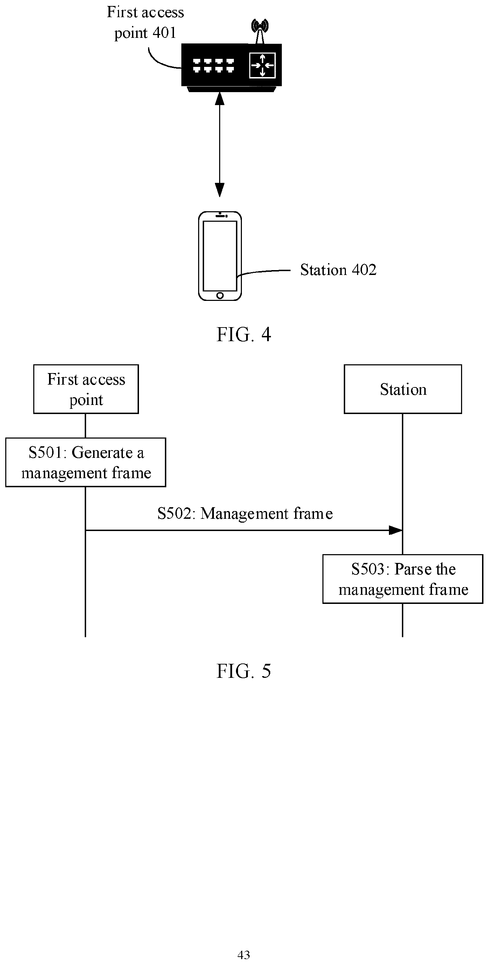

FIG. 4 shows a WLAN communication system to which an embodiment of this application is applicable. The WLAN communication system includes a first access point 401 and a station 402. Further, the WLAN communication system further includes a third access point 403 and a second access point 404 (not shown in FIG. 4).

The first access point 401 and the third access point 403 belong to a first multiple BSSID set, the first access point 401 is used as an AP that corresponds to a transmitted BSSID and that belongs to the first multiple BSSID set, and the third access point 403 is used as an AP that corresponds to a nontransmitted BSSID and that belongs to the first multiple BSSID set.

In addition, the third access point 403 and the second access point 404 belong to a same AP MLD (denoted as a first AP MLD). In other words, the third access point 403 and the second access point 404 are affiliated access points of the same AP MLD.

Optionally, the first access point 401 may be an AP belonging to a second AP MLD, and the second AP MLD is not the first AP MLD. Alternatively, the first access point may be an independent AP, that is, the first access point does not belong to any AP MLD.

Optionally, the second access point 404 may belong to a second multiple BSSID set, and the second multiple BSSID set is different from the first BSSID set. The second access point 404 may be an AP that corresponds to the transmitted BSSID and that belongs to the second multiple BSSID set, or may be an AP that corresponds to the nontransmitted BSSID and that belongs to the second multiple BSSID set. This is not specifically limited in this application.

The station 402 in this application may be a wireless communication chip, a wireless sensor, or a wireless communication terminal, for example, a user terminal, a user apparatus, an access apparatus, a subscriber station, a subscriber unit, a mobile station, a user agent, and user equipment supporting a Wi-Fi communication function. The user terminal may include various devices having a wireless communication function, for example, a handheld device, a vehicle-mounted device, a wearable device, an internet of things (internet of things, IoT) device, a computing device, another processing device connected to a wireless modem, user equipment (user equipment, UE) in various forms, a mobile station (mobile station, MS), a terminal (terminal), terminal equipment (terminal equipment), a portable communication device, a handheld device, a portable computing device, an entertainment device, a game device or system, a global positioning system device, or any other suitable device configured to perform network communication by using a wireless medium. In addition, the STA may support the 802.11be standard or a next-generation WLAN standard of the 802.11be standard. The STA may also support a plurality of WLAN standards such as 802.11ax, 802.11ac, 802.11n, 802.11g, 802.11b, and 802.11a.

An access point (for example, the first access point 401, the second access point 404, or the third access point 403) in embodiments of this application may be an apparatus that is deployed in a wireless communication network and that provides a wireless communication function for a STA associated with the access point, and is mainly deployed in a home, a building, and a campus. Atypical coverage radius is dozens of meters to hundreds of meters. Certainly, the access point may alternatively be deployed outdoors. The access point is equivalent to a bridge that connects the wired network and the wireless network. The access point is mainly used to connect various wireless network clients together and then connect the wireless network to an Ethernet. Specifically, the access point may be a communication device with a Wi-Fi chip, for example, a base station, a router, a gateway, a repeater, a communication server, a switch, or a bridge. The base station may include a macro base station, a micro base station, a relay station, and the like in various forms. In addition, the access point may support the 802.11be standard or a next-generation WLAN standard of the 802.11be standard. The access point may also support WLAN standards such as 802.11ax, 802.11ac, 802.11n, 802.11g, 802.11b, and 802.11a.

With reference to the accompanying drawings of this specification, the following describes in detail the inheritance method provided in embodiments of this application by using an example in which the first access point 401 shown in FIG. 4 interacts with the station 402.

It may be understood that in embodiments of this application, an execution body may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all operations in embodiments of this application may be necessarily performed.

It should be noted that, in the following embodiments of this application, unless otherwise specified, a transmitted BSSID is a transmitted BSSID in a first multiple BSSID set, and a nontransmitted BSSID is a nontransmitted BSSID in the first multiple BSSID set.

FIG. 5 is a schematic flowchart of an element inheritance method according to an embodiment of this application. The element inheritance method includes the following steps.

S501: A first access point generates a management frame.

The management frame includes a multiple BSSID element and an element corresponding to a transmitted BSSID. As described in related descriptions in FIG. 4, the element corresponding to the transmitted BSSID is an element provided by the first access point.

Optionally, the element corresponding to the transmitted BSSID may also be referred to as an element carried in the management frame, or an element that is carried in the management frame (an element that is carried in a management frame).

The multiple BSSID element includes a nontransmitted BSSID profile subelement, and the nontransmitted BSSID profile subelement includes a non-inheritance element. The nontransmitted BSSID profile subelement corresponds to a third access point, and the third access point corresponds to a nontransmitted BSSID, or the third access point is an AP corresponding to a nontransmitted BSSID.

Optionally, an element present in the nontransmitted BSSID profile subelement may be understood as an element provided by the third access point. An element indicated by an identifier listed in the non-inheritance element of the nontransmitted BSSID profile subelement may be understood as an element that cannot be provided by or does not need to be provided by the third access point.

The nontransmitted BSSID profile subelement includes a basic variant multi-link element, the basic variant multi-link element includes a per-station profile subelement, and the per-station profile subelement includes a non-inheritance element. The per-station profile subelement corresponds to a second access point. As described in the related description in FIG. 4, the second access point and the third access point belong to a same AP MLD.

It should be noted that the basic variant multi-link element may include a plurality of per-station profile subelements, each per-station profile subelement corresponds to one second access point, and different per-station profile subelements correspond to different second access points. A second access point corresponding to each per-station profile subelement may be indicated by a STA control field in the per-station profile subelement. In this application, one per-station profile subelement is used as an example for description, and a feature of the per-station profile subelement provided in this application is applicable to each per-station profile subelement included in the basic variant multi-link element.

Optionally, an element present in the per-station profile subelement may be understood as an element provided by the second access point. An element indicated by an identifier listed in the non-inheritance element of the per-station profile subelement may be understood as an element that cannot be provided by or does not need to be provided by the second access point.

In a case in which the element corresponding to the transmitted BSSID includes a first element, and an identifier of the first element is listed in the non-inheritance element of the nontransmitted BSSID profile subelement, the first element is set in the per-station profile subelement in the following two manners.

Manner 1: When the second access point does not inherit the first element, the identifier of the first element is listed in the non-inheritance element of the per-station profile subelement.

Optionally, that the second access point does not inherit the first element may be understood as that the second access point cannot provide or does not need to provide the first element or information about the first element.

Optionally, that the second access point does not inherit the first element may include that the second access point does not inherit the first element from the transmitted BSSID.

In some embodiments, the management frame in this application may be referred to as a first layer, the nontransmitted BSSID profile subelement may be referred to as a second layer, and the per-station profile subelement may be referred to as a third layer.

In other words, the manner 1 may also be described as follows: When the first element present at the first layer is not present at the second layer, and the identifier of the first element is listed in the non-inheritance element at the second layer, if an access point (namely, the second access point) corresponding to the third layer does not need to provide or cannot provide the first element or the information about the first element, the identifier of the first element is listed in the non-inheritance element at the third layer.

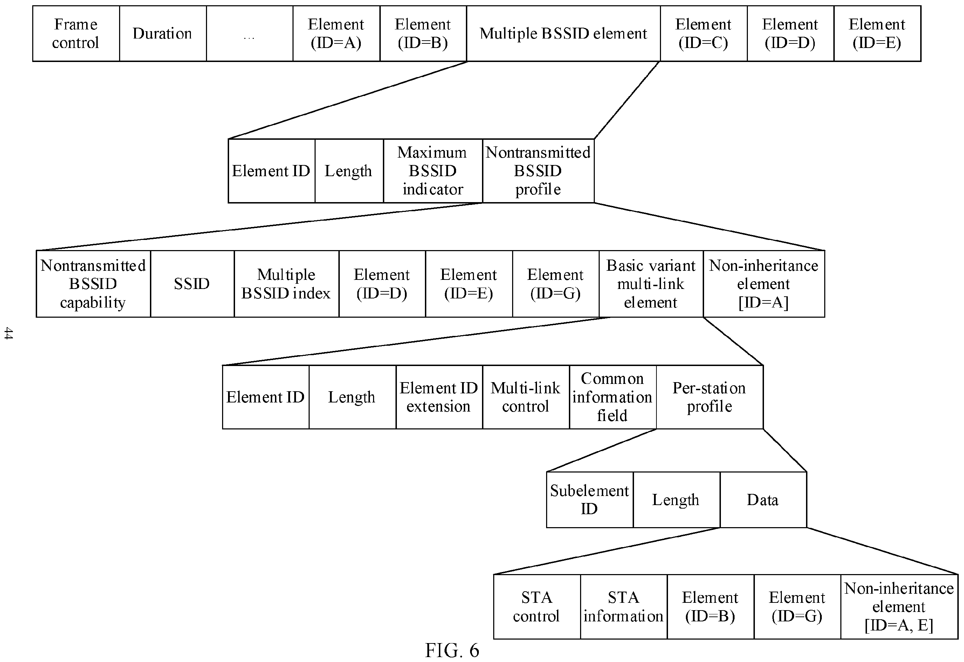

For example, as shown in FIG. 6, the element corresponding to the transmitted BSSID includes an element A, and an identifier of the element A is listed in the non-inheritance element of the nontransmitted BSSID profile subelement, that is, the nontransmitted BSSID does not inherit the element A from the transmitted BSSID. In this case, the identifier of the first element is listed in the non-inheritance element of the per-station profile subelement, to indicate that the second access point does not inherit the element A. For inheritance of other elements in FIG. 6, refer to related descriptions shown in FIG. 3. Details are not described herein again.

In the example shown in FIG. 6, an element that is not inherited from the first layer by the second layer is the element A, an element that is not inherited by the third layer includes the element A and an element E, and identifiers of the element A and the element E are listed in the non-inheritance element at the third layer. In other words, in this application, when the element that is not inherited by the second layer is not completely the same as or completely different from the element that is not inherited by the third layer, identifiers of all elements that are not inherited by the third layer are listed in the non-inheritance element at the third layer.

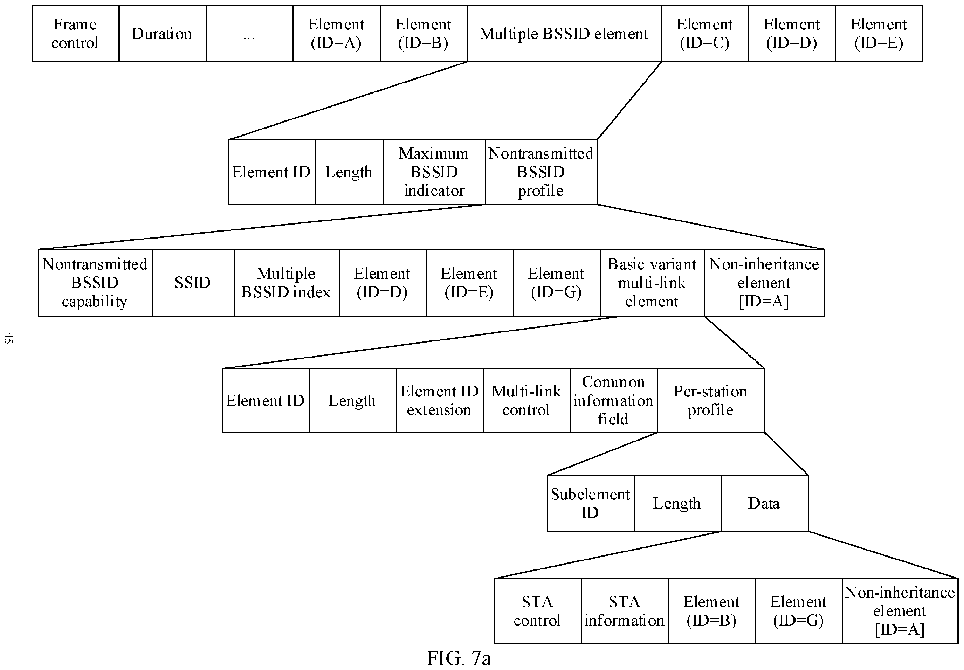

Alternatively, for example, as shown in FIG. 7a, the element corresponding to the transmitted BSSID includes an element A, and an identifier of the element A is listed in the non-inheritance element of the nontransmitted BSSID profile subelement, that is, the nontransmitted BSSID does not inherit the element A from the transmitted BSSID, and the second access point inherits an element E from the nontransmitted BSSID, that is, the element E present at the second layer is not present at the third layer, and an identifier of the element E is not listed in the non-inheritance element at the third layer. In this case, the identifier of the first element is listed in the non-inheritance element of the per-station profile subelement, to indicate that the second access point does not inherit the element A.

In the example shown in FIG. 7a, an element that is not inherited from the first layer by the second layer is the element A, an element that is not inherited by the third layer is also the element A, and the identifier of the element A is listed in the non-inheritance element at the third layer. In other words, in this application, when the element that is not inherited by the second layer is completely the same as the element that is not inherited by the third layer, identifiers of all elements that are not inherited by the third layer still need to be listed in the non-inheritance element at the third layer. In this scenario, it may be considered that the non-inheritance element is not inheritable because the third layer still carries the non-inheritance element when the non-inheritance element at the third layer is the same as the non-inheritance element at the second layer.

Manner 2: When the second access point inherits the first element from the element corresponding to the transmitted BSSID, the first element is not present in the per-station profile subelement, and the identifier of the first element is not listed in the non-inheritance element of the per-station profile subelement.

In this application, that the second access point inherits the first element from the element corresponding to the transmitted BSSID may also be described as that the second access point inherits the first element from the transmitted BSSID, and the two cases may be replaced with each other.

Optionally, that the second access point inherits the first element from the element corresponding to the transmitted BSSID may be understood as that the second access point provides a first element, and a value of the first element provided by the second access point is the same as a value of the first element corresponding to the transmitted BSSID or the same as a value of a first element provided by the first access point.

For example, in the manner 2, in the example shown in FIG. 3, the first element may be an element A. In this case, the frame structure shown in FIG. 3 may be understood as follows that an AP corresponding to the per-station profile subelement inherits the element A from the element corresponding to the transmitted BSSID.

In other words, when the first element present at a first layer is not present at a second layer, and the identifier of the first element is listed in the non-inheritance element at the second layer, if an access point (namely, the second access point) corresponding to a third layer provides the first element, and the value of the first element provided by the second access point is the same as a value of the first element present at the first layer, the first element may not be present at the third layer, and the identifier of the first element is not listed in the non-inheritance element at the third layer. In this scenario, it may be considered that inheritance exists between the third layer and the first layer.

Manner 3: When a value of the first element provided by the second access point is different from a value of the first element corresponding to the transmitted BSSID, the first element is present in the per-station profile subelement.

It may be understood that a value of the first element present in the per-station profile subelement is the value of the first element provided by the second access point.

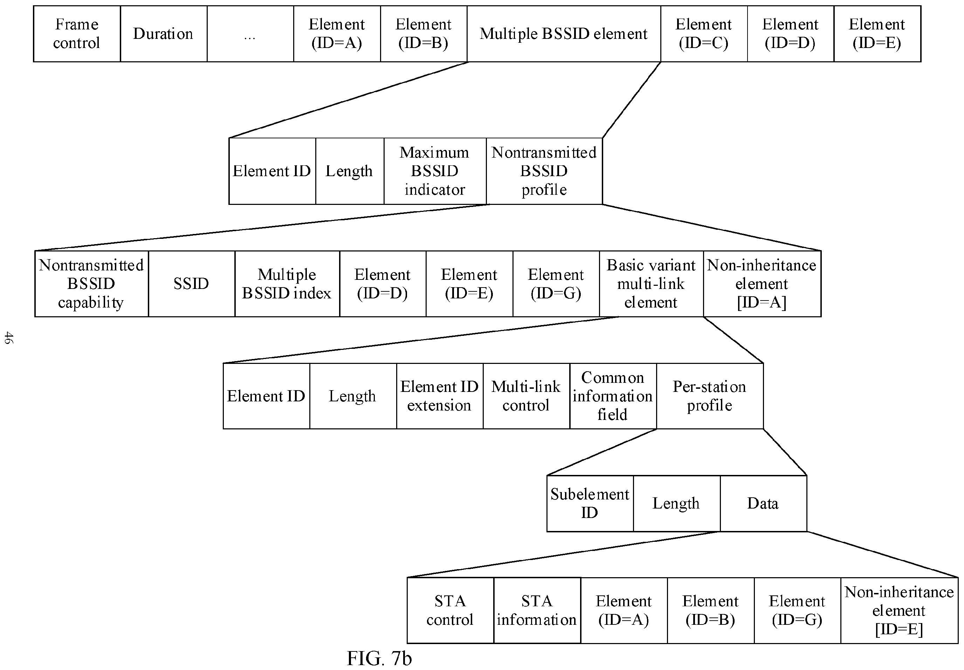

For example, as shown in FIG. 7b, a first element that is not inherited from the transmitted BSSID by the nontransmitted BSSID is an element A. If the second access point provides an element A, and a value of the element A provided by the second access point is different from the value of the first element corresponding to the transmitted BSSID, the element A is present in the per-station profile subelement.

In other words, when the first element present at a first layer is not present at a second layer, and the identifier of the first element is listed in the non-inheritance element at the second layer, if an access point (namely, the second access point) corresponding to a third layer provides the first element, and the value of the first element provided by the second access point is different from a value of the first element present at the first layer, the first element may be present at the third layer.

Optionally, the management frame may be a probe response (probe response) frame. Certainly, the management frame may alternatively be another type of management frame. A type of the management frame is not specifically limited in this application.

S502: The first access point sends the management frame to a station. Correspondingly, the station receives the management frame from the first access point.

Optionally, the first access point can send the management frame to the station in unicast or multicast mode. This is not specifically limited in this application.

S503: The station parses the management frame.

In a possible implementation, that the station parses the management frame may specifically include: In a case in which the element corresponding to the transmitted BSSID includes the first element, and the identifier of the first element is listed in the non-inheritance element of the nontransmitted BSSID profile subelement, when the identifier of the first element is listed in the non-inheritance element of the per-station profile subelement, the station determines that the second access point does not inherit the first element.

In other words, when the element present at the first layer is not present at the second layer, and the identifier of the first element is listed in the non-inheritance element at the second layer, if the identifier of the first element is listed in the non-inheritance element at the third layer, the station determines that the access point (namely, the second access point) corresponding to the third layer does not need to provide or cannot provide the first element or the information about the first element.

For example, if a structure of the management frame is shown in FIG. 6, the station may determine that the second access point does not need to provide or cannot provide the first element or the information about the first element.

In another possible implementation, that the station parses the management frame may specifically include: In a case in which the element corresponding to the transmitted BSSID includes the first element, and the identifier of the first element is listed in the non-inheritance element of the nontransmitted BSSID profile subelement, when the first element is not present in the per-station profile subelement, and the identifier of the first element is not listed in the non-inheritance element of the per-station profile subelement, the station determines that the second access point inherits the first element from the element corresponding to the transmitted BSSID.

In other words, when the first element present at the first layer is not present at the second layer, and the identifier of the first element is listed in the non-inheritance element at the second layer, if the first element is not present at the third layer, and the identifier of the first element is not listed in the non-inheritance element at the third layer, the station may determine that the access point (namely, the second access point) corresponding to the third layer provides the first element, and the value of the first element provided by the second access point is the same as the value of the first element present at the first layer.

For example, if a structure of the management frame is shown in FIG. 3, the station may determine that the second access point provides the first element, and the value of the first element provided by the second access point is the same as the value of the first element present at the first layer.

Based on this solution, for the first element that is not inherited from the transmitted BSSID by the nontransmitted BSSID, the identifier of the first element is listed in the non-inheritance element of the per-station profile subelement. This can directly and explicitly indicate that the access point corresponding to the per-station profile subelement does not inherit the first element, so that the station learns that the access point corresponding to the per-station profile subelement does not provide the first element.

Alternatively, when the access point corresponding to the per-station profile subelement provides the first element, and the value of the first element is the same as the value of the first element corresponding to the transmitted BSSID, the first element may not be present in the per-station profile subelement, and the identifier of the first element is not listed in the non-inheritance element of the per-station profile subelement, to indicate that the access point corresponding to the per-station profile subelement inherits the first element from the element corresponding to the transmitted BSSID. Compared with a solution in which the access point corresponding to the per-station profile subelement can inherit an element from only the nontransmitted BSSID, in this solution, the first element may not be present in the per-station profile subelement. This can reduce signaling overheads occupied by the first element.

In some embodiments, there may be at least one of the following inheritance relationships between the transmitted BSSID, the nontransmitted BSSID, and the second access point.
1. In a case in which the element corresponding to the transmitted BSSID includes a second element, a second element is present in the nontransmitted BSSID profile subelement, and a value of the second element corresponding to the transmitted BSSID is different from a value of the second element present in the nontransmitted BSSID profile subelement,
   when the second access point inherits the second element from the nontransmitted BSSID, the second element is not present in the per-station profile subelement, and an identifier of the second element is not listed in the non-inheritance element of the per-station profile subelement, where the nontransmitted BSSID corresponds to the third access point, and the third access point corresponds to the nontransmitted BSSID profile subelement.

In other words, in a case in which the second elements are respectively present at the first layer and the second layer, and the value of the second element present at the first layer is different from the value of the second element present at the second layer, when the second access point inherits the second element from the nontransmitted BSSID, the second element may not be present at the third layer, and the identifier of the second element is not listed in the non-inheritance subelement at the third layer.

For example, as shown in FIG. 6, the second element may be an element D. When elements D are respectively present at the first layer and the second layer, and the second access point inherits the second element from the nontransmitted BSSID, no second element is present at the third layer, and the identifier of the second element is not listed in the non-inheritance subelement at the third layer. Correspondingly, in this scenario, for the station, the method may further include: In this case in which the element corresponding to the transmitted BSSID includes the second element, the second element is present in the nontransmitted BSSID profile subelement, and a value of the second element corresponding to the transmitted BSSID is different from a value of the second element present in the nontransmitted BSSID profile subelement,
when no second element is present in the per-station profile subelement, and the identifier of the second element is not listed in the non-inheritance element of the per-station profile subelement, the station determines that the second access point inherits the second element from the nontransmitted BSSID, that is, determines that the second access point provides a second element, and a value of the second element provided by the second access point is the same as the value of the second element provided by the third access point.

2. In a case in which a third element is present in the nontransmitted BSSID profile subelement, when the second access point does not inherit the third element, an identifier of the third element is listed in the non-inheritance element of the per-station profile subelement, or when the second access point inherits the third element from the nontransmitted BSSID, the third element is not present in the per-station profile subelement, and an identifier of the third element is not listed in the non-inheritance element of the per-station profile subelement.

In other words, in a case in which the third element is present at the second layer, when the second access point does not inherit the third element, the identifier of the third element is listed in the non-inheritance element at the third layer, or when the second access point inherits the third element from the nontransmitted BSSID, the third element may not be present in the third layer, and the identifier of the third element is not listed in the non-inheritance element at the third layer.

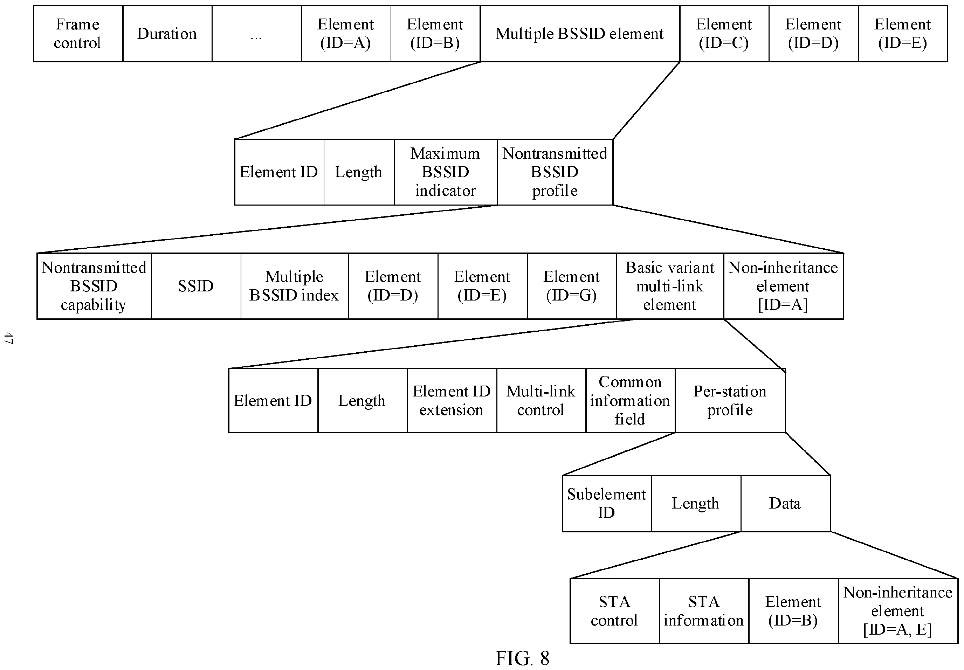

For example, as shown in FIG. 6, the third element may be an element E. When the element E is present at the second layer, and the second access point does not inherit the element E, an identifier of the element E is listed in the non-inheritance element at the third layer. Alternatively, as shown in FIG. 8, the third element may be an element G. When the second access point inherits the third element from the nontransmitted BSSID, no element G is present at the third layer, and an identifier of the element G is not listed in the non-inheritance element at the third layer.

Correspondingly, in this scenario, for the station, the method may further include: In this case in which the third element is present in the nontransmitted BSSID profile subelement, when the identifier of the third element is listed in the non-inheritance element of the per-station profile subelement, the station determines that the second access point does not inherit the third element, that is, determines that the second access point does not provide the third element or information about the third element, or when the third element is not present in the per-station profile subelement, and the identifier of the third element is not listed in the non-inheritance element of the per-station profile subelement, the station determines that the second access point inherits the third element from the nontransmitted BSSID, that is, determines that the second access point provides a third element, and a value of the third element provided by the second access point is the same as a value of the third element provided by the third access point.

It may be understood that, for this relationship 2, whether the third element is present in the per-station profile subelement is irrelevant to whether the element corresponding to the transmitted BSSID includes a third element, that is, the relationship 2 is applicable regardless of whether the element corresponding to the transmitted BSSID includes the third element.

In addition, this application further provides an element inheritance rule. The rule may include: When an element that is not inherited from the transmitted BSSID by the nontransmitted BSSID is completely the same as an element that is not inherited by the second access point, no non-inheritance element is present in the per-station profile subelement. That is, when an element indicated by the identifier listed in the non-inheritance element at the second layer is completely the same as the element that is not inherited by the second access point, no non-inheritance element is present at the third layer.

Optionally, that no non-inheritance element is present in the per-station profile subelement may be understood as follows: The per-station profile subelement inherits a non-inheritance element corresponding to the nontransmitted BSSID, in other words, the non-inheritance element of the per-station profile subelement is the same as the non-inheritance element of the nontransmitted BSSID profile subelement. In this scenario, it may be considered that the non-inheritance element is inheritable.

Optionally, the element that is not inherited by the second access point may be understood as an element that does not need to be provided by or cannot be provided by the second access point, and the two elements may be replaced with each other.

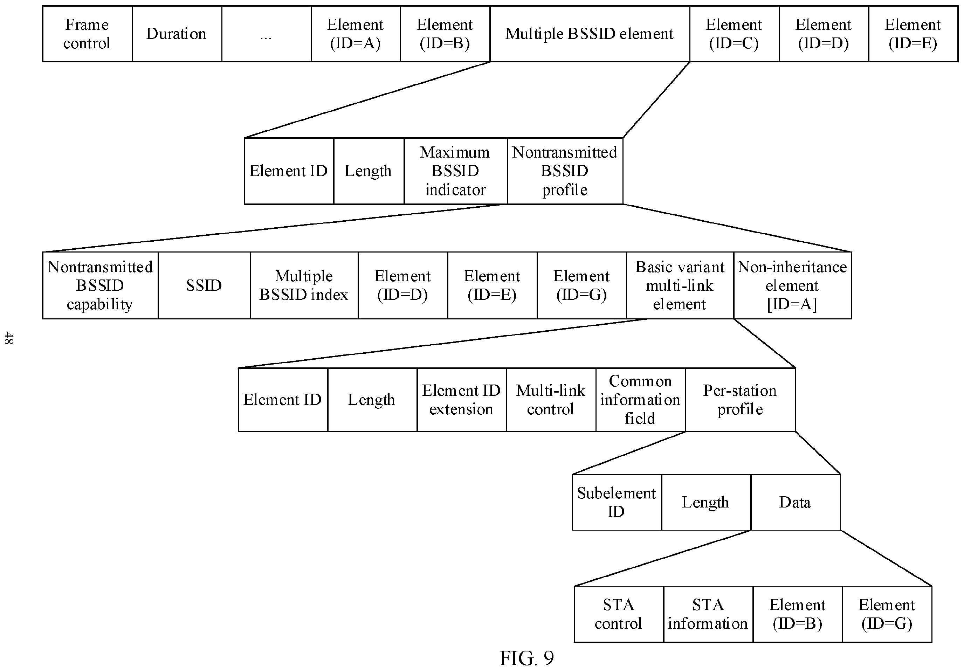

For example, as shown in FIG. 9, an identifier of an element A is listed in the non-inheritance element at the second layer, which indicates that the nontransmitted BSSID does not inherit the element A from the transmitted BSSID. When the element that is not inherited by the second access point is also the element A, the per-station profile subelement includes no non-inheritance element. It may be understood that, in the example shown in FIG. 9, the second access point inherits an element E from the nontransmitted BSSID.

Optionally, the rule may alternatively include: When an element that is not inherited from the transmitted BSSID by the nontransmitted BSSID is not completely the same as or completely different from an element that is not inherited by the second access point, identifiers of all elements that are not inherited by the second access point are listed in the non-inheritance element of the per-station profile subelement.

In other words, when an element indicated by the identifier listed in the non-inheritance element at the second layer is not completely the same as or completely different from the element that is not inherited by the second access point, the identifiers of all the elements that are not inherited by the second access point are listed in the non-inheritance element at the third layer.

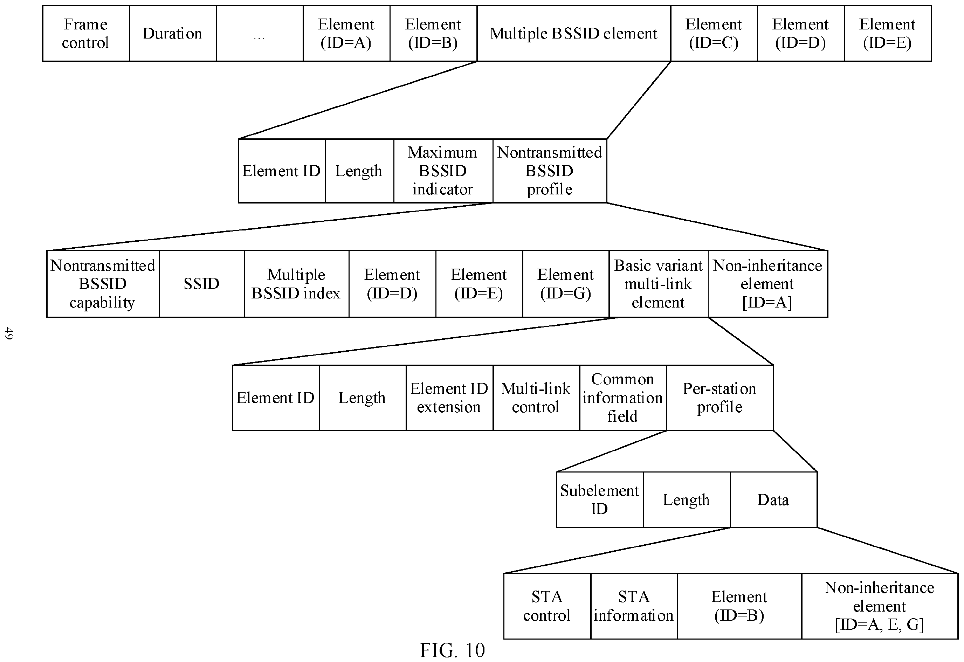

For example, as shown in FIG. 10, an identifier of an element A is listed in the non-inheritance element at the second layer, to identify that the nontransmitted BSSID does not inherit the element A from the transmitted BSSID. When the element that is not inherited by the second access point includes an element A, an element E, and an element G, identifiers of the element A, the element E, and the element G are listed in the non-inheritance element of the per-station profile subelement.

Optionally, the rule may further include: When the element that is not inherited from the transmitted BSSID by the nontransmitted BSSID is the same as an element that needs to be provided by the second access point, the element is present in the per-station profile subelement. In this scenario, it may be considered that an element inheritance sequence is from the transmitted BSSID to the nontransmitted BSSID, and there is no inheritance relationship between the nontransmitted BSSID and the access point corresponding to the per-station profile subelement, and between the transmitted BSSID and the access point corresponding to the per-station profile subelement.

In other words, when an element present at the first layer is not present at the second layer, and an identifier of the element is listed in the non-inheritance element at the second layer, if the second access point needs to provide the element, the element is present at the third layer.

Optionally, a value of the element provided by the second access point may be the same as or different from a value of the element corresponding to the transmitted BSSID. This is not specifically limited in this application.

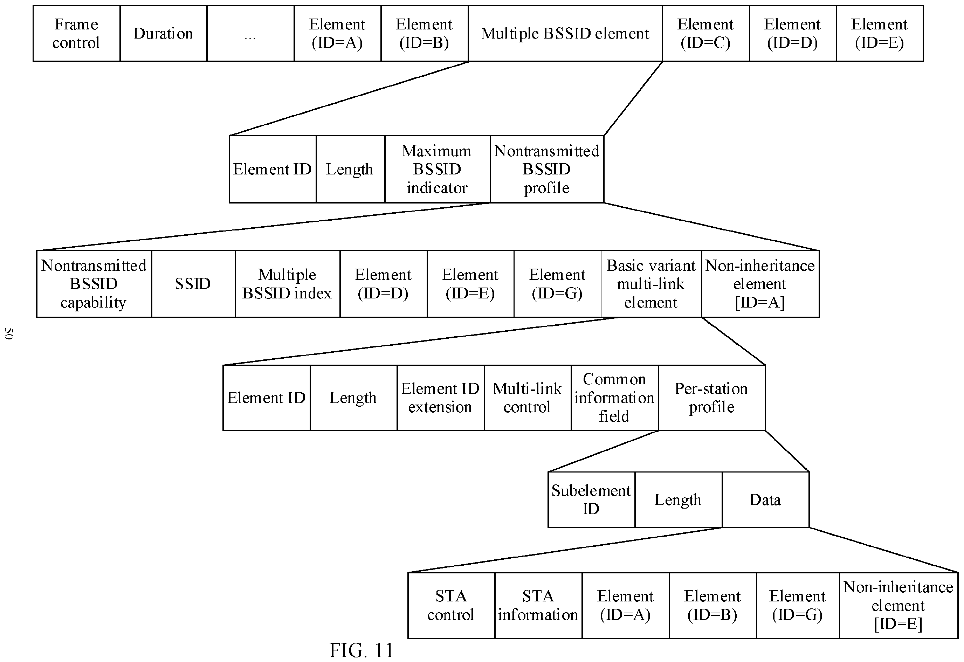

For example, as shown in FIG. 11, an identifier of an element A is listed in the non-inheritance element at the second layer, to identify that the nontransmitted BSSID does not inherit the element A from the transmitted BSSID. When the second access point needs to provide the element A, the element A is present at the third layer. It may be understood that, in the example shown in FIG. 11, the second access point does not inherit an element E.

The foregoing describes the element inheritance method in embodiments of this application. The following describes a communication apparatus in embodiments of this application. The communication apparatus in embodiments of this application includes a communication apparatus used in a transmitter and a communication apparatus used in a receiver. It should be understood that the communication apparatus used in the transmitter is the first access point used in the foregoing method, and has any function of the first access point used in the foregoing method. The communication apparatus used in the receiver is the station used in the foregoing method, and has any function of the station used in the foregoing method.

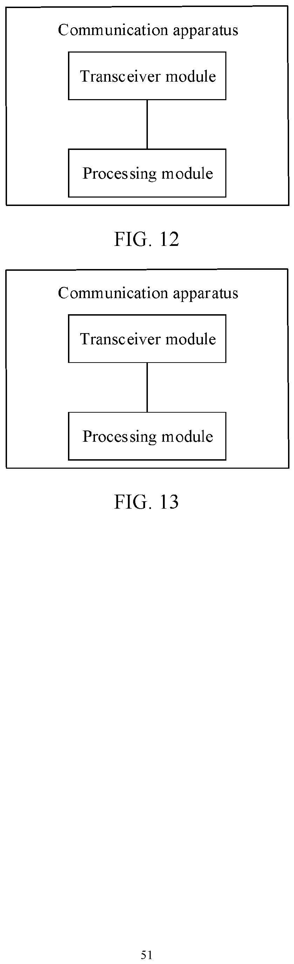

As shown in FIG. 12, the communication apparatus used in the transmitter includes a processing module and a transceiver module.

The processing module is configured to generate a management frame. The transceiver module is configured to send the management frame. The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point.

In a case in which the element corresponding to the transmitted BSSID includes a first element, and an identifier of the first element is listed in a non-inheritance element of the nontransmitted BSSID profile subelement, when the second access point does not inherit the first element, the identifier of the first element is listed in a non-inheritance element of the per-station profile subelement, or when the second access point inherits the first element from the element corresponding to the transmitted BSSID, the first element is not present in the per-station profile subelement, and the identifier of the first element is not listed in a non-inheritance element of the per-station profile subelement.

It should be understood that the communication apparatus used in the transmitter provided in this embodiment of this application is the first access point used in the foregoing method, and has any function of the first access point used in the foregoing method. For specific details, refer to the foregoing method. Details are not described herein again.

As shown in FIG. 13, the communication apparatus used in the receiver includes a processing module and a transceiver module.

The transceiver module is configured to receive a management frame from a first access point, the management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point.

The processing module is configured to: in a case in which the element corresponding to the transmitted BSSID includes a first element, and an identifier of the first element is listed in a non-inheritance element of the nontransmitted BSSID profile subelement, when the identifier of the first element is listed in a non-inheritance element of the per-station profile subelement, determine that the second access point does not inherit the first element, or when the first element is not present in the per-station profile subelement, and the identifier of the first element is not listed in a non-inheritance element of the per-station profile subelement, determine that the second access point inherits the first element from the element corresponding to the transmitted BSSID.

It should be understood that the communication apparatus used in the transmitter provided in this embodiment of this application is the station used in the foregoing method, and has any function of the station used in the foregoing method. For specific details, refer to the foregoing method. Details are not described herein again.

The foregoing describes the communication apparatus used in the transmitter and the communication apparatus used in the receiver in embodiments of this application. The following describes possible product forms of the communication apparatus used in the transmitter and the communication apparatus used in the receiver. It should be understood that any form of product having the features of the communication apparatus used in the transmitter in FIG. 12 and any form of product having the features of the communication apparatus used in the receiver in FIG. 13 fall within the protection scope of this application. It should be further understood that the following description is merely an example, and a product form of the communication apparatus used in the transmitter and a product form of the communication apparatus used in the receiver in embodiments of this application are not limited thereto.

As a possible product form, the communication apparatus used in the transmitter and the communication apparatus used in the receiver in embodiments of this application may be implemented by using a general bus architecture.

The communication apparatus used in the transmitter includes a processor and a transceiver that is internally connected to and communicates with the processor. The processor is configured to generate a management frame, and the transceiver is configured to send the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement, when the second access point does not inherit the first element, the identifier of the first element is listed in a non-inheritance element of the per-station profile subelement, or when the second access point inherits the first element from the element corresponding to the transmitted BSSID, the first element is not present in the per-station profile subelement, and the identifier of the first element is not listed in a non-inheritance element of the per-station profile subelement.

Optionally, the communication apparatus used in the transmitter may further include a memory. The memory is configured to store instructions executed by the processor.

The communication apparatus used in the receiver includes a processor and a transceiver that is internally connected to and communicates with the processor. The transceiver is configured to receive a management frame, and the processor is configured to parse the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. The processor is specifically configured to: in a case in which the element corresponding to the transmitted BSSID includes a first element, and an identifier of the first element is listed in a non-inheritance element of the nontransmitted BSSID profile subelement, when the identifier of the first element is listed in a non-inheritance element of the per-station profile subelement, determine that the second access point does not inherit the first element, or when the first element is not present in the per-station profile subelement, and the identifier of the first element is not listed in a non-inheritance element of the per-station profile subelement, determine that the second access point inherits the first element from the element corresponding to the transmitted BSSID.

Optionally, the communication apparatus used in the receiver may further include a memory. The memory is configured to store instructions executed by the processor.

As a possible product form, the communication apparatus used in the transmitter and the communication apparatus used in the receiver in embodiments of this application may be implemented by using a general-purpose processor.

The general-purpose processor for implementing the communication apparatus used in the transmitter includes a processing circuit and an output interface that is internally connected to and communicates with the processing circuit. The processing circuit is configured to generate a management frame. The output interface is configured to send the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. In a case in which the element corresponding to the transmitted BSSID includes a first element, and an identifier of the first element is listed in a non-inheritance element of the nontransmitted BSSID profile subelement, when the second access point does not inherit the first element, the identifier of the first element is listed in a non-inheritance element of the per-station profile subelement, or when the second access point inherits the first element from the element corresponding to the transmitted BSSID, the first element is not present in the per-station profile subelement, and the identifier of the first element is not listed in a non-inheritance element of the per-station profile subelement.

Optionally, the general-purpose processor may further include a storage medium, and the storage medium is configured to store instructions executed by the processing circuit.

The general-purpose processor for implementing the communication apparatus used in the receiver includes a processing circuit and an input interface that is internally connected to and communicates with the processing circuit. The input interface is configured to receive a management frame. The processing circuit is configured to parse the management frame.

The management frame includes a multiple BSSID element and an element corresponding to a transmitted BSSID, the multiple BSSID element includes a nontransmitted BSSID profile subelement, the nontransmitted BSSID profile subelement includes a basic variant multi-link element, the basic variant multi-link element includes a per-station profile subelement, and the per-station profile subelement corresponds to a second access point. The processing circuit is specifically configured to: in a case in which the element corresponding to the transmitted BSSID includes a first element, and an identifier of the first element is listed in a non-inheritance element of the nontransmitted BSSID profile subelement, when the identifier of the first element is listed in a non-inheritance element of the per-station profile subelement, determine that the second access point does not inherit the first element, or when the first element is not present in the per-station profile subelement, and the identifier of the first element is not listed in a non-inheritance element of the per-station profile subelement, determine that the second access point inherits the first element from the element corresponding to the transmitted BSSID.

Optionally, the general-purpose processor may further include a storage medium, and the storage medium is configured to store instructions executed by the processing circuit.

In another possible product form, the communication apparatus used in the transmitter and the communication apparatus used in the receiver in embodiments of this application may alternatively be implemented by using the following components: one or more field-programmable gate arrays (field-programmable gate arrays, FPGAs), a programmable logic device (programmable logic device, PLD), a controller, a state machine, gate logic, a discrete hardware component, any other suitable circuits, or any combination of circuits that can perform various functions described in this application.

It should be understood that the communication apparatus used in the transmitter and the communication apparatus used in the receiver in the foregoing product forms respectively have any function of the first access point and any function of the station in the foregoing method embodiments. Details are not described herein again.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for ease and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An element inheritance method, wherein the method comprises:
generating, by a first access point, a management frame, wherein the management frame comprises a multiple basic service set identifier BSSID element and an element corresponding to a transmitted BSSID, the multiple BSSID element comprises a nontransmitted BSSID profile subelement, the nontransmitted BSSID profile subelement comprises a basic variant multi-link element, the basic variant multi-link element comprises a per-station profile subelement, the per-station profile subelement corresponds to a second access point, and in a case in which the element corresponding to the transmitted BSSID comprises a first element, and an identifier of the first element is listed in a non-inheritance element of the nontransmitted BSSID profile subelement,
when the second access point does not inherit the first element, the identifier of the first element is listed in a non-inheritance element of the per-station profile subelement, or
when the second access point inherits the first element from the element corresponding to the transmitted BSSID, the first element is not present in the per-station profile subelement, and the identifier of the first element is not listed in a non-inheritance element of the per-station profile subelement; and
sending, by the first access point, the management frame.

2. The method according to claim 1, wherein the nontransmitted BSSID profile subelement corresponds to a third access point, the third access point corresponds to a nontransmitted BSSID, and in a case in which the element corresponding to the transmitted BSSID comprises a second element, a second element is present in the nontransmitted BSSID profile subelement, and a value of the second element corresponding to the transmitted BSSID is different from a value of the second element present in the nontransmitted BSSID profile subelement,
when the second access point inherits the second element from the nontransmitted BSSID, the second element is not present in the per-station profile subelement, and an identifier of the second element is not listed in the non-inheritance element of the per-station profile subelement.

3. The method according to claim 1 or 2, wherein the nontransmitted BSSID profile subelement corresponds to the third access point, the third access point corresponds to the nontransmitted BSSID, and in a case in which a third element is present in the nontransmitted BSSID profile subelement,
when the second access point does not inherit the third element, an identifier of the third element is listed in the non-inheritance element of the per-station profile subelement, or
when the second access point inherits the third element from the nontransmitted BSSID, the third element is not present in the per-station profile subelement, and an identifier of the third element is not listed in the non-inheritance element of the per-station profile subelement.

4. An element inheritance method, wherein the method comprises:
receiving, by a station, a management frame from a first access point, wherein the management frame comprises a multiple basic service set identifier BSSID element and an element corresponding to a transmitted BSSID, the multiple BSSID element comprises a nontransmitted BSSID profile subelement, the nontransmitted BSSID profile subelement comprises a basic variant multi-link element, the basic variant multi-link element comprises a per-station profile subelement, the per-station profile subelement corresponds to a second access point, and in a case in which the element corresponding to the transmitted BSSID comprises a first element, and an identifier of the first element is listed in a non-inheritance element of the nontransmitted BSSID profile subelement,
when the identifier of the first element is listed in a non-inheritance element of the per-station profile subelement, determining, by the station, that the second access point does not inherit the first element, or
when the first element is not present in the per-station profile subelement, and the identifier of the first element is not listed in a non-inheritance element of the per-station profile subelement, determining, by the station, that the second access point inherits the first element from the element corresponding to the transmitted BSSID.

5. The method according to claim 4, wherein the nontransmitted BSSID profile subelement corresponds to a third access point, the third access point corresponds to a nontransmitted BSSID, and the method further comprises: in a case in which the element corresponding to the transmitted BSSID comprises a second element, a second element is present in the nontransmitted BSSID profile subelement, and a value of the second element corresponding to the transmitted BSSID is different from a value of the second element present in the nontransmitted BSSID profile subelement,
when the second element is not present in the per-station profile subelement, and an identifier of the second element is not listed in the non-inheritance element of the per-station profile subelement, determining, by the station, that the second access point inherits the second element from the nontransmitted BSSID.

6. The method according to claim 4 or 5, wherein the nontransmitted BSSID profile subelement corresponds to the third access point, the third access point corresponds to the nontransmitted BSSID, and the method further comprises: in a case in which a third element is present in the nontransmitted BSSID profile subelement,
when an identifier of the third element is listed in the non-inheritance element of the per-station profile subelement, determining, by the station, that the second access point does not inherit the third element, or
when the third element is not present in the per-station profile subelement, and an identifier of the third element is not listed in the non-inheritance element of the per-station profile subelement, determining, by the station, that the second access point inherits the third element from the nontransmitted BSSID.

7. A first access point, wherein the first access point comprises a processing module and a transceiver module;
the processing module is configured to generate a management frame, the management frame comprises a multiple basic service set identifier BSSID element and an element corresponding to a transmitted BSSID, the multiple BSSID element comprises a nontransmitted BSSID profile subelement, the nontransmitted BSSID profile subelement comprises a basic variant multi-link element, the basic variant multi-link element comprises a per-station profile subelement, the per-station profile subelement corresponds to a second access point, and in a case in which the element corresponding to the transmitted BSSID comprises a first element, and an identifier of the first element is listed in a non-inheritance element of the nontransmitted BSSID profile subelement,
when the second access point does not inherit the first element, the identifier of the first element is listed in a non-inheritance element of the per-station profile subelement, or
when the second access point inherits the first element from the element corresponding to the transmitted BSSID, the first element is not present in the per-station profile subelement, and the identifier of the first element is not listed in a non-inheritance element of the per-station profile subelement; and
the transceiver module is configured to send the management frame.

8. The first access point according to claim 7, wherein the nontransmitted BSSID profile subelement corresponds to a third access point, the third access point corresponds to a nontransmitted BSSID, and in a case in which the element corresponding to the transmitted BSSID comprises a second element, a second element is present in the nontransmitted BSSID profile subelement, and a value of the second element corresponding to the transmitted BSSID is different from a value of the second element present in the nontransmitted BSSID profile subelement,
when the second access point inherits the second element from the nontransmitted BSSID, the second element is not present in the per-station profile subelement, and an identifier of the second element is not listed in the non-inheritance element of the per-station profile subelement.

9. The first access point according to claim 7 or 8, wherein the nontransmitted BSSID profile subelement corresponds to the third access point, the third access point corresponds to the nontransmitted BSSID, and in a case in which a third element is present in the nontransmitted BSSID profile subelement,
when the second access point does not inherit the third element, an identifier of the third element is listed in the non-inheritance element of the per-station profile subelement, or
when the second access point inherits the third element from the nontransmitted BSSID, the third element is not present in the per-station profile subelement, and an identifier of the third element is not listed in the non-inheritance element of the per-station profile subelement.

10. A station, wherein the station comprises a processing module and a transceiver module; the transceiver module is configured to receive a management frame from a first access point, the management frame comprises a multiple basic service set identifier BSSID element and an element corresponding to a transmitted BSSID, the multiple BSSID element comprises a nontransmitted BSSID profile subelement, the nontransmitted BSSID profile subelement comprises a basic variant multi-link element, the basic variant multi-link element comprises a per-station profile subelement, and the per-station profile subelement corresponds to a second access point; and
the processing module is configured to: in a case in which the element corresponding to the transmitted BSSID comprises a first element, and an identifier of the first element is listed in a non-inheritance element of the nontransmitted BSSID profile subelement,
when the identifier of the first element is listed in a non-inheritance element of the per-station profile subelement, determine that the second access point does not inherit the first element, or
when the first element is not present in the per-station profile subelement, and the identifier of the first element is not listed in a non-inheritance element of the per-station profile subelement, determine that the second access point inherits the first element from the element corresponding to the transmitted BSSID.

11. The station according to claim 10, wherein the nontransmitted BSSID profile subelement corresponds to a third access point, the third access point corresponds to a nontransmitted BSSID, and
the processing module is further configured to: in a case in which the element corresponding to the transmitted BSSID comprises a second element, a second element is present in the nontransmitted BSSID profile subelement, and a value of the second element corresponding to the transmitted BSSID is different from a value of the second element present in the nontransmitted BSSID profile subelement,
when the second element is not present in the per-station profile subelement, and an identifier of the second element is not listed in the non-inheritance element of the per-station profile subelement, determine that the second access point inherits the second element from the nontransmitted BSSID.

12. The station according to claim 10 or 11, wherein the nontransmitted BSSID profile subelement corresponds to the third access point, the third access point corresponds to the nontransmitted BSSID, and the processing module is further configured to: in a case in which a third element is present in the nontransmitted BSSID profile subelement,
when an identifier of the third element is listed in the non-inheritance element of the per-station profile subelement, determine that the second access point does not inherit the third element, or
when the third element is not present in the per-station profile subelement, and an identifier of the third element is not listed in the non-inheritance element of the per-station profile subelement, determine that the second access point inherits the third element from the nontransmitted BSSID.

13. A first access point, wherein the first access point comprises a processing circuit and an output interface that is internally connected to and communicates with the processing circuit;
the processing module is configured to generate a management frame, the management frame comprises a multiple basic service set identifier BSSID element and an element corresponding to a transmitted BSSID, the multiple BSSID element comprises a nontransmitted BSSID profile subelement, the nontransmitted BSSID profile subelement comprises a basic variant multi-link element, the basic variant multi-link element comprises a per-station profile subelement, the per-station profile subelement corresponds to a second access point, and in a case in which the element corresponding to the transmitted BSSID comprises a first element, and an identifier of the first element is listed in a non-inheritance element of the nontransmitted BSSID profile subelement,
when the second access point does not inherit the first element, the identifier of the first element is listed in a non-inheritance element of the per-station profile subelement, or
when the second access point inherits the first element from the element corresponding to the transmitted BSSID, the first element is not present in the per-station profile subelement, and the identifier of the first element is not listed in a non-inheritance element of the per-station profile subelement; and
the output interface is configured to send the management frame.

14. A station, wherein the station comprises a processing circuit and an input interface that is internally connected to and communicates with the processing circuit;
the input interface is configured to receive a management frame from a first access point, the management frame comprises a multiple basic service set identifier BSSID element and an element corresponding to a transmitted BSSID, the multiple BSSID element comprises a nontransmitted BSSID profile subelement, the nontransmitted BSSID profile subelement comprises a basic variant multi-link element, the basic variant multi-link element comprises a per-station profile subelement, and the per-station profile subelement corresponds to a second access point; and
the processing circuit is configured to: in a case in which the element corresponding to the transmitted BSSID comprises a first element, and an identifier of the first element is listed in a non-inheritance element of the nontransmitted BSSID profile subelement,
when the identifier of the first element is listed in a non-inheritance element of the per-station profile subelement, determine that the second access point does not inherit the first element, or
when the first element is not present in the per-station profile subelement, and the identifier of the first element is not listed in a non-inheritance element of the per-station profile subelement, determine that the second access point inherits the first element from the element corresponding to the transmitted BSSID.

15. A computer-readable storage medium, configured to store a computer program, wherein the computer program comprises instructions used to perform the method according to any one of claims 1 to 3.

16. A computer-readable storage medium, configured to store a computer program, wherein the computer program comprises instructions used to perform the method according to any one of claims 4 to 6.

17. A computer program product, wherein the computer program product comprises instructions used to implement the method according to any one of claims 1 to 3.

18. A computer program product, wherein the computer program product comprises instructions used to implement the method according to any one of claims 4 to 6.
